Europäisches Patentamt

(19) European Patent Office

Office européen des brevets

(11) Numéro de publication: **0 012 664**
**B1**

(12) **FASCICULE DE BREVET EUROPEEN**

(45) Date de publication du fascicule du brevet: **13.04.83**

(21) Numéro de dépôt: **79400957.1**

(22) Date de dépôt: **04.12.79**

(51) Int. Cl.³: **G 06 F 13/00**

(54) Dispositif de détection automatique de la capacité de mémoire d'un système de traitement ou de transmission de l'information.

(30) Priorité: **06.12.78 FR 7834413**

(43) Date de publication de la demande:
**25.06.80 Bulletin 80/13**

(45) Mention de la délivrance du brevet:
**13.04.83 Bulletin 83/15**

(84) Etats contractants désignés:
**DE GB IT**

(56) Documents cités:
**DE - A - 2 443 176**
**FR - A - 2 212 958**
**US - A - 3 898 631**

**IBM TECHNICAL DISCLOSURE BULLETIN, vol.
18, no. 11, avril 1976, New York, US,
AICHELMANN: "Dynamic Array Return Address
Validation", page 3717**

(73) Titulaire: **COMPAGNIE INTERNATIONALE POUR
L'INFORMATIQUE CII - HONEYWELL BULL (dite
CII-HB)**
**94, avenue Gambetta**
**F-75020 Paris (FR)**

(72) Inventeur: **Girard, Paul Marie**
**2 bis, rue de Savoie**
**F-78000 Versailles (FR)**

(74) Mandataire: **Doireau, Marc et al,**
**CII-Honeywell Bull Division Propriété Industrielle**
**94, avenue Gambetta Boîte Postale 33**
**F-75960 Paris cedex 20 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# 0 012 664

Dispositif de détection automatique de la capacité de mémoire d'un systéme de traitement ou de transmission de l'information

L'invention concerne un dispositif de détection automatique de la capacité de mémoire d'un système de traitement ou de transmission de l'information.

Dans ces systèmes les mémoires emmagasinent un volume plus ou moins étendu d'informations. L'étendue de ce volume d'emmagasinage de l'information est désigné sous le nom de "capacité de mémoire". Les informations contenues dans ce volume sont toutes repérées par une adresse. Ce volume contient donc une adresse de début et une adresse de fin ou de limite de capacité mémoire. Pour des raisons économiques et commerciales évidentes les mémoires sont découpées en éléments modulaires. Ces éléments de mémoire, ou modules, constituent des fragments de la mémoire totale. Ils présentent une capacité réduite. Leur coût est donc beaucoup plus faible qu'une mémoire complète.

Au début de son exploitation, un système peut être équipé d'une mémoire de faible capacité donc comportant peu de modules de mémoire ou même, dans certains cas un seul module. Par la suite, la capacité de mémoire pourra être étendue progressivement jusqu'à sa valeur maximale.

Seulement, toutes les fois qu'une capacité de mémoire est modifiée, en ajoutant des modules, ou en en retranchant en cas de défaillance, il est nécessaire que les utilisateurs des systèmes en soient avertis pour qu'ils puissent utiliser toute l'étendue de cette mémoire mise à leur disposition mais dans la limite exacte de sa capacité.

L'affichage des valeurs des capacités des différentes mémoires utilisées dans un système pour informer les utilisateurs nécessite des manipulations longues et fastidieuses sur des batteries d'interrupteurs ou des liaisons câblées pour lesquelles les risques d'erreurs ne sont pas négligeables. Ces manipulations sont à entreprendre naturellement à chaque nouvelle modification de la capacité mémoire.

The document DE—A—2443176 décrit un système pour déterminer automatiquement la capacité d'une mémoire divisée en modules.

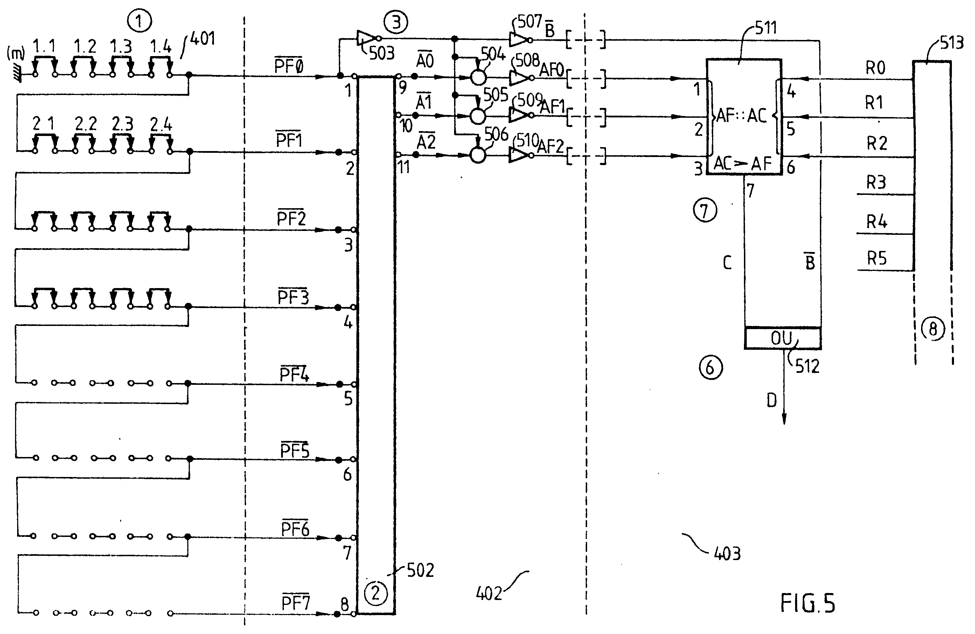

Une source de signaux LMCR fournit un signal numérique correspondant à la capacité d'un module, comme cela est décrit en référence à la figure 5.

En se référant à la figure 4 de ce document, un additionneur ADR reçoit un signal à 5 bits de la source LMCR et un signal de début d'adresse sur 6 bits du registre à décalage SPSR. La somme de ces deux signaux définit la limite supérieure du module et la limite inférieure du module suivant.

Ensuite, une fois tous les modules montés, la capacité totale de tous les modules est emmagasinée dans le registre TMCR. Enfin, une unité TRD permet de détecter un dépassement de capacité à partir de l'information enregistrée dans le registre TMCR.

En conclusion, ce document décrit un dispositif correspondant au préambule de la revendication 1. Il comprend:

— un détecteur de présence physique de module de mémoire,
— un générateur d'adresse limite de capacité de mémoire,
— et un détecteur de dépassement de capacité mémoire.

Le document US—A 3898631 décrit un dispositif pour tester et indiquer numériquement le nombre de bytes de mémoire contenus dans une unité de mémoire.

Des cartes mémoire (14) sont reçues dans un fond de panier. Sur chaque carte sont prévus deux conducteurs (16) court-circuités par un cavalier (18) et respectivement reliés à une source de tension +V et à l'entrée (21) d'un circuit logique par l'intermédiaire d'une résistance (20). La fonction du circuit logique est d'indiquer le nombre de ses entrées (21) qui sont court-circuitées par les cavaliers (18).

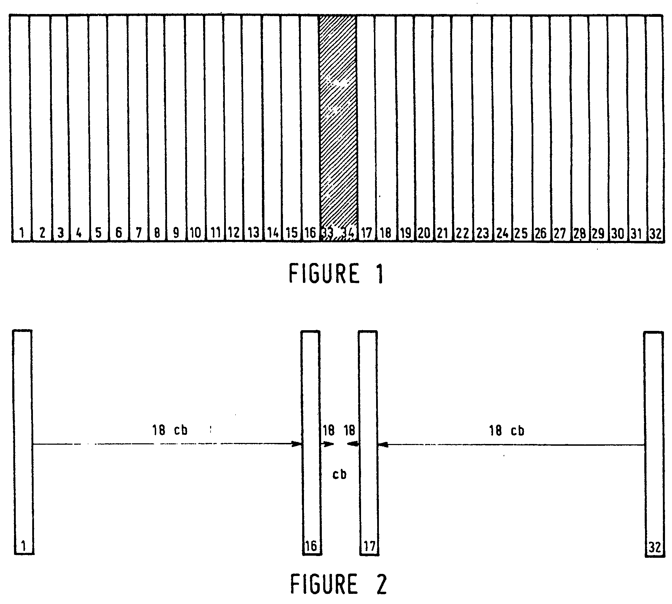

Le volume de ce circuit logique s'accroît considérablement avec le volume maximal de la mémoire. Cette solution ne permet pas de déduire immédiatement un signal indiquant la présence physique des modules. En effet, il suffit pour cela de se reporter à la figure 1 pour constater qu'il est nécessaire de mettre en place toute une logique complexe (circuits 22a, 22b, 24a, 24b) pour détecter la présence physique des modules et la mauvaise insertion d'une carte (détection dynamique).

La présente invention, telle qu'elle est caractérisée dans les revendications, per met de réaliser un dispositif automatique de détection de la capacité de mémoire plus simple.

Ainsi toute adjonction ou toute extraction de module de mémoire sera instantanément connue du système qui pourra s'adapter immédiatement à la nouvelle situation. Il découle de cela que toute intervention subsidiaire au niveau de clefs, de cavaliers, ou de liaisons câblées sera évitée et partant outre le gain de temps procuré, une protection contre les erreurs éventuelles de manipulations sera obtenue.

L'invention sera mieux comprise à l'aide de la description faite au regard des dessins qui va suivre et représentant seulement un made d'exécution.

La figure 1 représente un banc de 32 modules de mémoire.

La figure 2 montre une association de 4 modules de mémoire qui constituent une fraction insécable du banc de mémoire.

La figure 3 représente la liaison entre un module de mémoire et le circuit imprimé de fond de panier.

La figure 4 représente sous forme synoptique les dispositifs électroniques nécessaires à la mise en oeuvre de l'invention.

La figure 5 représente en détail une réalisation des dispositifs représentés à la figure 4.

La figure 6 représente le tracé du circuit imprimé constituant le capteur d'insertion de modules de mémoire.

La figure 7 représente le tableau de vérité donnant le codage des signaux délivrés par le générateur d'adresse et le détecteur de limite de capacité.

La figure 8 est une représentation du codeur de priorité utilisé dans le dispositif représenté à la figure 5.

Dans l'exemple de réalisation de la figure 1 le système de mémorisation comporte 32 modules de mémoire. Ce sous-ensemble appelé "Bloc" ou "Banc de mémoire" peut exister en plusieurs exemplaires dans un système.

Chacune des capacités de mémoire de ces bancs doit donc être connue des organes utilisateurs de la mémoire. Physiquement un banc de mémoire est constitué d'un réceptable ou panier muni d'un circuit imprimé appelé "Fond de panier" sur lequel sont montés des connecteurs. Un module de mémoire est alors réalisé sur un circuit imprimé appelé "Plaque de mémoire" et qui est enfichable sur un des connecteurs de fond de panier. Les connecteurs numérotés 1 à 32 reçoivent des plaques de mémoire, c'est-à-dire des modules de mémoire. Les emplacements numérotés 33 et 34 correspondant à la zone hachurée de la figure 1 sont réservés à logique de commande du banc de mémoire. Cette logique se raccorde au reste du système à travers un ensemble de signaux dit interface de banc ou de bloc de mémoire.

Sur la figure 2 une fraction insécable de la mémoire est représentée à l'aide de quatre modules mémoire. Ce nombre n'est absolument pas limitatif mais le nombre quatre convient bien à certaines organisations des systèmes par exemple pour utiliser au moindre coût un code auto-correcteur d'erreur en travaillant sur 72 chiffres alors que le module de mémoire présente un interface de 18 chiffres binaires, il est alors nécessaire de monter 4 modules mémoire en parallèle pour obtenir l'interface de bloc désiré à 72 chiffres binaires. Il faudra donc s'assurer de la présence effective de ces 4 modules pour chaque fraction de capacité mémoire implantée.

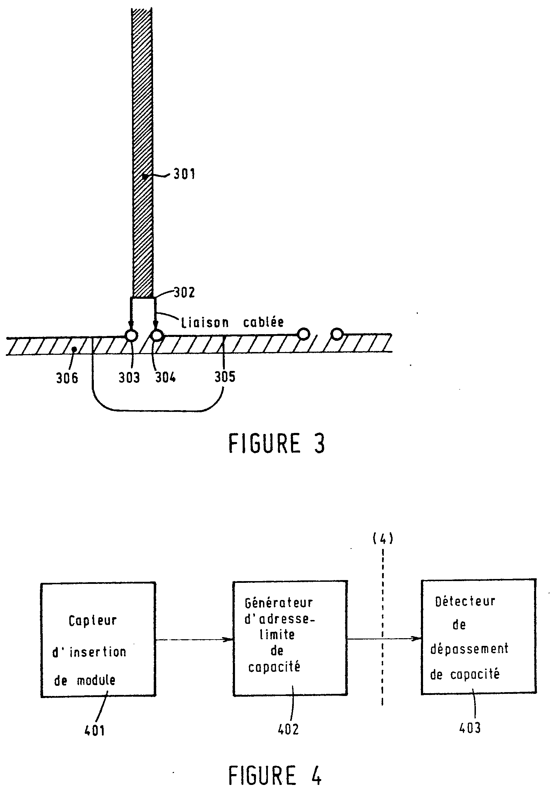

La figure 3 représente la liaison entre un module mémoire et le circuit imprimé de fond de panier. Chaque module de mémoire 301 est muni d'une liaison câblée 302 assurant la continuité électrique entre deux points de connexions 303 et 304 du fond de panier 306. En enfichant le modules dans le connecteur correspondant à son emplacement, cette liaison câblée viendra assurer la continuité électrique d'un fil 305 tracé sur le circuit de fond de panier et relié aux points de connection 303 et 304. En l'absence de module, le circuit électrique tracé sur le fond de panier est ouvert. Ce circuit passe de proche en proche au niveau de chaque emplacement de module suivant une loi définie plus loin.

Comme le représente la figure 4 la mise en oeuvre de l'invention fait appel à la combinaison de trois dispositifs:

— un capteur d'insertion de module 401 dont le principe de base est évoqué ci-dessus,
— un générateur d'adresse-limite 402 de capacité de mémoire,
— un détecteur de dépassement de capacité de mémoire 403.

L'implantation de ces 3 dispositifs dans un système de traitement ou de transmission de l'information peut être quelconque, on pourra par exemple concevoir le générateur d'adresse-limite de capacité situé dans un bloc de mémoire et le détecteur de dépassement de capacité dans un organe utilisateur de mémoire si bien que l'interface entre un banc de module et le reste du système se trouvera entre les dispositifs 402 et 403 de la figure 4.

La réalisation détaillée du dispositif de contrôle automatique de capacité mémoire est représentée à la figure 5. Le capteur d'insertion de module 401 est essentiellement réalisé par le câblage du circuit imprimé de fond de panier évoqué plus haut. Ce câblage commence par une masse m, puis passe successivement par les connections associés aux 4 premiers modules symbolisés par leurs liaisons câblées 1.1, 1.2, 1.3, 1.4. Un fil est alors sorti vers le générateur d'adresse-limite 402 sous le nom d'equipotentielle $\overline{PF0}$. Les 4 premiers modules constituent la première fraction de capacité du banc de mémoire.

La mise en cascade des prises de liaison câblée des différents modules garantit que le signal $\overline{PF0}$ ne sera mis au potentiel "0" (à la masse m) que lorsque seront présents les 4 modules constituant la première fraction de capacité mémoire. Ainsi est garantie la présence simultanée effective de modules formant cette première fraction de capacité de mémoire lorsque le signal $\overline{PF0}$ ("Présence de la Fraction" sous forme complémentaire) est mis au niveau logique 0. De la même manière, l'intégrité des autres fractions de mémoires est assurée par la mise au niveau logique "0" des différents signaux de présence de fraction, $\overline{PF1}$, $\overline{PF2}$, $\overline{PF3}$ etc.... Les liaisons câblées 2.1, 2.2, 2.3 et 2.4 des modules constituant la deuxième fraction de capacité mémoire sont en effet également mises en série et ainsi de suite.

Par ailleurs, étant donné la mise en série des groupes successifs de quatre prises de liaisons câblées correspondant aux fractions consécutives de la mémoire, il n'est pas possible de faire

## 0012 664

apparaître, sous forme d'un signal de présence $\overline{PFn}$ ou potential zéro, une fraction d'ordre n si la fraction d'ordre n—1 n'est pas déjà implantée dans son intégralité.

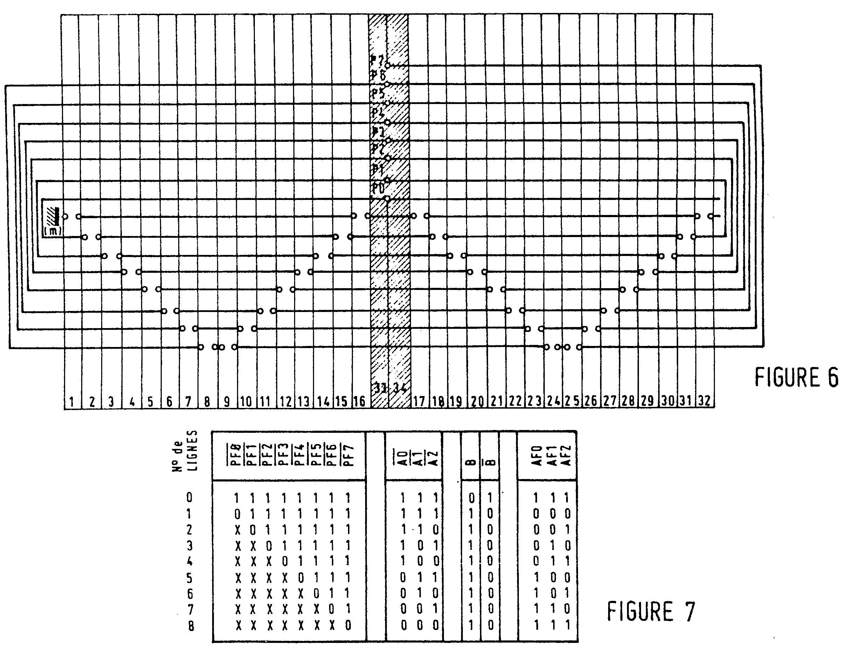

Ainsi, par exemple, il n'est pas possible de mettre au travail, c'est-à-dire au potential "zéro", le signal $\overline{PF1}$ indiquant la présence de la seconde fraction de bloc de mémoire sans avoir auparavant obtenu la mise au niveau logique "zéro" du signal précédent $\overline{PF\emptyset}$ par l'implantation complète de la première fraction de bloc. Ceci est récursif de $\overline{PF\emptyset}$ à $\overline{PF7}$. Le dessin du circuit imprimé réalisant le câblage du capteur d'insertion de modules est donné à la figure 6. Il apparaît sous la forme d'une sorte de colimaçon. Cette disposition présente l'avantage de s'inscrire dans une couche unique de circuit imprimé. Les emplacements des modules correspondant aux fractions successives du bloc de mémoire sont donnés par le tableau suivant:

| Fraction de bloc de mémoire | Emplacement de Module |
|---|---|
| Première | 1, 16, 17, 32 |
| Seconde | 2  15, 18, 31 |
| Troisième | 3, 14, 19, 30 |
| Quatrième | 4, 13, 20, 29 |
| Cinquième | 5, 12, 21, 28 |
| Sixième | 6, 11, 22, 27 |
| Septième | 7, 10, 23, 26 |
| Huitième | 8,  9, 24, 25 |

Le fil délivrant le signal d'indication de présence de la première fraction communique en P$\emptyset$ avec la logique de commande (zone hachurée) après avoir collecté les prises d'insertion en 1, 16, 17 et 32 ont reçu la masse m. Il revient ensuite pour saisir les prises d'insertions suivantes, 2, 15, 18, 31 pour délivrer en P1 le signal de présence de la seconde fraction, et ainsi de suite.

Le générateur d'addresse-limite de capacité représenté à la figure 5 est essentiellement constitué par un circuit intégré à moyenne échelle désigné sous le nom de "codeur de priorité" 502. Ce circuit reçoit sur ses entrées respectives 1, 2, 3, 4, 5, 6, 7 et 8 les signaux $\overline{PFO}$, $\overline{PF1}$, $\overline{PF2}$, $\overline{PF3}$, $\overline{PF4}$, $\overline{PF5}$, $\overline{PF6}$ et $\overline{PF7}$. Il délivre sur ses sorties respectives 9, 10, 11, les valeurs binaires A0, A1, A2. Il peut être défini par sa table de vérité donnée par les deux tableaux de gauche de la figure 7 qui expriment les configurations binaires prises par le vecteur de sortie ($\overline{A0}$, $\overline{A1}$, $\overline{A2}$) en fonction du vecteur d'entrée ($\overline{PFO}$, $\overline{PF1}$, $\overline{PF2}$ ... PF7). Les croix dans le tableau des vecteurs d'entrée indiquent que les valeurs binaires prises pour les composantes du vecteur correspondant à la colonne considérée peuvent prendre des valeurs binaires indifférentes "zéro" ou "un". En fait, dans les cas du dispositif décrit les valeurs prises seront des niveaux logiques "zéro".

Au fur et à mesure que l'on étend la capacité de mémoire, les configurations d'entrée sont celles figurant dans les lignes successives. Ainsi, lorsqu'il n'y a aucun module dans le système, tous les signaux d'entrée $\overline{PFO}$ à $\overline{PF7}$ sont dans le même état, c'est-à-dire à la valeur logique "un" puisqu'aucune liaison câblée n'est enfichée, traduisant l'insertion d'aucun module. La première ligne du tableau marquée 0 nous donne donc les configurations d'entrée et de sortie dans ce cas. On voit que le vecteur de sortie est ($\overline{A0}$, $\overline{A1}$, $\overline{A2}$)=(1, 1, 1). Lorsqu'on enfiche la première série de quatre modules correspondant à la première fraction de bloc implantée, un niveau "zéro" apparaît sur le fil $\overline{PFO}$, sans modification des autres signaux $\overline{PF1}$ à $\overline{PF7}$. Les configurations d'entrée et de sortie sont données par la seconde ligne du tableau, marquée 1. La configuration de sortie reste inchangée. Elle sera différenciée par les circuits montés à la suite du codeur de priorité. Après l'insertion des quatre modules suivants correspondant à la seconde fraction de capacité de mémoire, c'est la troisième ligne marquée 2 qui affiche les valeurs binaires d'entrée et de sortie, ainsi de suite. On remarque que le vecteur de sortie ($\overline{A0}$, $\overline{A1}$, $\overline{A2}$) donne, sous forme binaire codée et complémentée, le rang de la dernière fraction de capacité de mémoire implantée, en commençant par la valeur 0 en codage direct pour la première fraction, puis 1 pour la seconde, etc..., jusqu'à 7 pour la huitième.

L'inverseur 503 fournit le signal B à la valeur logique vraie "un" dès qu'une première fraction de mémoire est implantée en inversant le signal PFO, qui, dans ce cas, vient de prendre la valeur "zéro". Ce signal B valide les signaux ($\overline{A0}$, $\overline{A1}$, $\overline{A2}$) au moyen de la batterie de circuits "ET" 504, 505, 506. Après une série de nouvelles inversions au moyen des inverseurs 507, 508, 509 et 510 les signaux $\overline{B}$, AFO, AF1, AF2 sont présentés sur l'interface de bloc en sortie du générateur d'adresse-limite. On remarque alors, comme il est indiqué dans les deux tableaux de droite de la figure 7, que la validation par le signal B des signaux $\overline{A0}$, $\overline{A1}$, $\overline{A2}$ permet de différencier pour ce vecteur l'absence de module, de l'insertion de la première fraction. L'inversion due aux inverseurs 508, 509 et 510 assure en outre le codage binaire direct du vecteur ($\overline{AFO}$, $\overline{AF1}$, $\overline{AF2}$) caractérisant ainsi l'adresse-limite (ou adresse-frontière) de capacité de mémoire implantée. (Voir colonnes AFO, AF1, AF2 de la table de la figure 7). Enfin le signal $\overline{B}$ obtenu par l'inverseur 507 à partir du signal B permet de différencier l'absence totale de module donnée à la ligne 0, de la configuration de bloc de mémoire complètement plein figurant à la ligne 8, puisque dans l'un et l'autre cas, le vecteur d'interface ($\overline{B}$, AFO, AF1, AF2) prend respectivement les valeurs (1, 1, 1, 1) et (0, 1, 1, 1) ceci va être mis à profit dans l'exploitation qui en est faite par le dispositif suivant.

Le détecteur de dépassement de capacité 403 représenté en détail à la figure 5 a pour but de fournir à l'organe utilisateur de la mémoire un signal qui l'alertera soit en cas d'absence totale de mémoire, soit, ce qui revient au même, dès que le système tentera de franchir la limite de la mémoire présente. Pour cela, le circuit "OU 512" sur la figure 5 donne la valeur logique vraie lorsque le signal $\overline{B}$ est lui-même à "un" c'est-a-dire lorsqu'aucun module de mémoire n'est implanté (mémoire entièrement vide). Dans ce cas, le système pourra immédiatement soit annoncer l'absence de mémoire quelle que soit l'adresse qu'il essaie, soit s'adresser à un bloc de mémoire s'il en dispose. (système multi-blocs).

D'autre part, le circuit à moyenne intégration 511 sur la figure 5 est un comparateur. Il reçoit le vecteur d'adresse-limite (AFO, AF1, AF2) sur ses entrées 1, 2 et 3. Il compare la valeur binaire codée de cette entrée à celle apparaissant sur ses entrées 4, 5, 6.

Ces dernières reçoivent le vecteur (RO, R1, R2) provenant de la partie supérieure du registre d'adresse 513 de l'organe utilisateur du bloc de mémoire. Les fils RO, R1, R2 ainsi que les fils suivants R3, R4, R5 etc.... de poids plus faibles sont également dirigés vers le bloc de mémoire pour l'adressage. Le comparateur 511 délivre seur sa sortie 7 un signal C qui exprime l'inégalité mathématique AC>AF où AC est l'adresse courante composée par le vecteur (RO, R1, R2) des poids forts du registre d'adresse 513 et AF le vecteur d'adresse-limite (AFO, AF1, AF2) défini plus haut. Le signal C est transmis sur une entrée de la porte "OU 512" dont l'autre entrée reçoit le signal $\overline{B}$ de l'inverseur 507. La porte "OU 512" delivre un signal d'alarme D lorsque le signal C ou le signal $\overline{B}$ sont presents. Ainsi tant que l'organe utilisateur adresse la zone effectivement implantée, par exemple avec les vecteurs (AFO, AF1, AF2)=(0, 0, 0) et (RO, R1, R2)=(0, 0, 0) dans le premier huitième de bloc, le signal de sortie C (AC>AF) reste à "zéro". Il n'y a pas d'alarme D. (Le signal B est aussi à zéro puisque la mémoire n'est pas vide). S'il n'y a qu'un huitième de bloc présent, dès que le registre d'adresse prend la première valeur au-delà du premier huitième en affichant (RO, R1, R2)=(0, 0, 1) et vecteur AF=(0, 0, 0) donc vecteur AC>vecteur AF (0, 0, 1>0, 0, 0).

Le fil C monte à "un" déclenchant l'alarme D qui permet au système de ramener immédiatement son regisitre d'adresse 513 à une valeur plus faible compatible avec la mémoire dont il dispose.

Le mécanisme fonctions de la même manière au niveau des différentes capacités implantées, un quart, trois huitième, etc....

La division en huitièmes n'est pas limitative; des fractions plus faibles ou plus importantes n'infirment pas le principe de l'invention. Les circuits constituant le comparateur 511 sont bien connus; on pourra se reporter au circuit de la société Texas Instruments commercialisé sous la référence SN 7485.

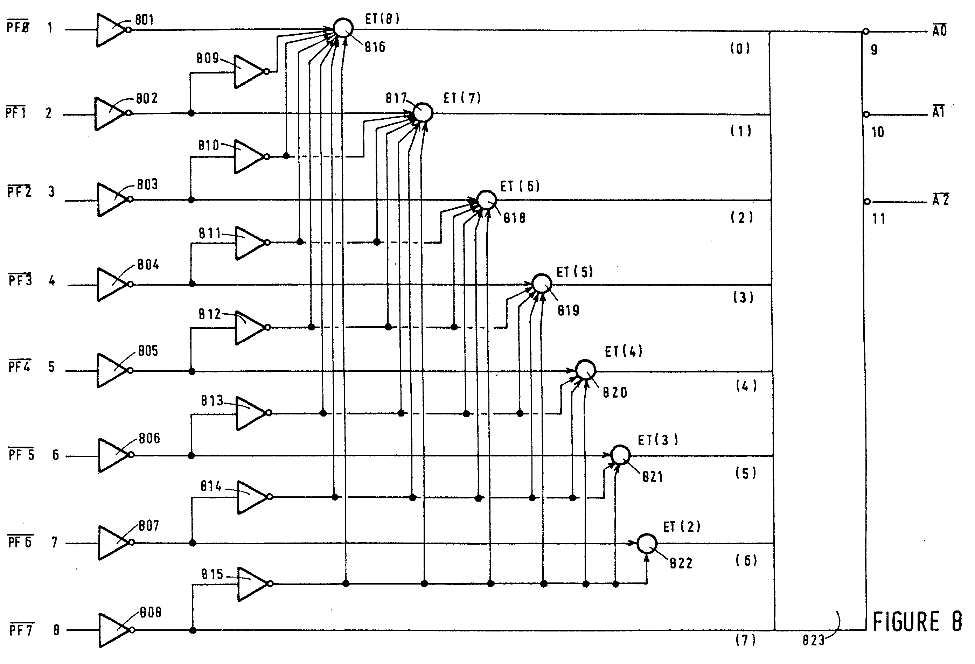

La figure 8 représente le schéma du codeur de priorité 502 de la figure 5. Les signaux $\overline{PFO}$ à $\overline{PF7}$ provenant du capteur d'insertion de modules sont appliqués respectivement aux entrées des inverseurs 801 à 808 dont les sorties se trouvent reliées respectivement à une entrée des portes "ET" 816 à 822. Les sorties des inverseurs 802 à 808 sont aussi reliées respectivement aux entrées des inverseurs 809 à 815. Les portes "ET" 816 à 822 commandent les entrées 0 à 7 respectives des entrées 0 à 6 d'un codeur décimal binaire classique et sont validées par les sorties respectives des inverseurs 809 à 815 de façon à réaliser les fonctions logiques suivantes:

$$ET816=PF0 \cap_{i=1}^{i=7}=\overline{PF_i}=PF_0 \cap \overline{PF_1} \cap \overline{PF_2} \cap \ldots \overline{PF_7}$$

$$ET817=PF1 \cap_{i=2}^{i=7} \overline{PF_i}$$

$$ET818=PF2 \cap_{i=3}^{i=7} \overline{PF_i}$$

$$ET819=PF3 \cap_{i=4}^{i=7} \overline{PF_i}$$

$$ET820=PF4 \cap_{i=5}^{i=7} \overline{PF_i}$$

$$ET821=PF5 \cap_{i=6}^{i=7} \overline{PF_i}$$

$$ET822=PF6 \cap PF_7 \quad \overline{PF_7}$$

Le signe utilisé est le signe de l'intersection logique. L'entrée 7 du codeur 823 est reliée à la sortie de l'inverseur 808.

Ce circuit est du reste connu et il sera par exemple possible de se le procurer près de la société FAIRCHILD qui le commercialise sous la référence 9318.

**Revendications**

1. Dispositif de détection automatique de la capacité de mémoire d'un système de traitement ou

**0 012 664**

de transmission de l'information comprenant au moins une mémoire; dans lequel la mémoire est partagée en plusieurs fractions de mémoire comprenant un nombre déterminé de modules électroniques (301), chaque module électronique étant enfichable et connectable sur une plaque de circuit imprimé (306) pour réaliser les connections entre les modules de la mémoire et les dispositifs de traitement; un détecteur de présence physique (401) des modules de mémoire; un générateur d'adresse limite (402) de la capacité de mémoire installée; un détecteur de dépassement (403) de la capacité mémoire, caractérisé en ce que: le détecteur de présence physique (401) des modules de mémoire est constitué, pour chaque fraction de mémoire, par au moins un conducteur (305) tracé sur le circuit imprimé (306) et présentant autant de discontinuités (303—304) que le nombre de modules mémoire constituant une fraction de mémoire, la continuité du conducteur (305) étant obtenue par des liaisons cablées (302) solidaires des modules mémoire (301) à raison d'une liaison cablée par module mémoire; le détecteur de présence physique (401) ne délivrant un signal de présence d'une fraction de mémoire d'ordre n que si la continuité du conducteur (305) associé est assurée ainsi que la continuité du conducteur (305) de la fraction de mémoire d'ordre (n—1).

2. Dispositif selon la revendication 1, caractérisé en ce que les discontinuités (303—304) d'un conducteur (305) associé à une fraction de mémoire sont en série, l'ensemble des conducteurs (305) étant imprimés sur une couche unique du circuit imprimé (306) précité.

3. Dispositif selon la revendication 1 ou 2, caractérisé en ce que les deux extrémités d'un conducteur (305) précité sont respectivement reliées à la masse et à une entrée du générateur d'adresse limite (402) précité.

## Patentansprüche

1. Vorrichtung zur automatischen Feststellung der Speicherkapazität eines Informationsverarbeitungs- oder Übertragungssystems, das wenigstens einen Speicher enthält; bei welchem der Speicher in mehrere Speicherbereiche unterteilt ist, die eine bestimmte Anzahl von Elektronikmoduln (301) umfassen, wobei jeder Elektronikmodul einsteckbar ist und auf einer gedruckten Schaltungsplatte (306) angeschlossen werden kann, um die Verbindungen zwischen den Speichermoduln und den Verarbeitungsvorrichtungen herzustellen; mit einem Detektor (401) zur Feststellung des physischen Vorhandenseins von Speichermoduln; mit einem Generator (402) für die Adresse and der Grenze des Fassungsvermögens des eingebauten Speichers; mit einem Detektor (403) der das Überschreiten der Speicherkapazität feststellt, dadurch gekennzeichnet, daß: der Detektor für das physische Vorhandensein (401) der Speichermoduln für jeden Speicherbereich gebildet ist aus wenigstens einem Leiter (305), der auf der gedruckten Schaltung (306) geführt ist und ebenso viele Unterbrechungen (303, 304) aufweist wie Speichermoduln vorhanden sind, die einen Speicherbereich bilden, wobei die Kontinuität des Leiters (305) durch Verbindungen (302) erhalten wird, die auf den Speichermoduln (301) verkabelt sind, mit einer verkabelten Verbindung pro Speichermodul; und daß der Detektor (401) für das physische Vorhandensein ein Präsenzsignal eines Speicherbereiches der Ordnungszahl n nur dann abgibt, wenn die Kontinuität eines zugeordneten Leiters (305) sowie die Kontinuität des Leiters (305) des Speicherbereiches der Ordnungszahl (n—1) gewährleistet ist.

2. Vorrichtung nach Anspruch 1, dadurch gekennzeichnet, daß die Unterbrechungen (303—304) eines Leiters (305), der einem Speicherbereich zugeordnet ist, in Reihe liegen, wobei die Gesamtheit der Leiter (305) auf einer einzigen Schicht der genannten gedruckten Schaltung (306) aufgedruckt ist.

3. Vorrichtung nach Anspruch 1 oder 2, dadurch gekennzeichnet, daß die beiden Enden eines Leiter (305) mit Masse bzw. mit einem Eingang des genannten Grenzadressengenerators (402) verbunden sind.

## Claims

1. A device for the automatic detection of the capacity of the memory of a system for the processing or transmission of data comprising at least one memory; in which the memory is divided into several memory portions comprising a predetermined number of electronic modules (301), each electronic module being capable of plugging into and connectable to a printed circuit board (306) in order to establish the connections between the modules of the memory and the processing devices, a detector (401) of the physical presence of the memory modules, a generator (402) of the limit address of the capacity of the installed memory, a detector (403) of exceeding the capacity of the memory, characterised in that the detector (401) of the physical presence of the memory modules is constituted, for each portion of the memory, by at least one conductor (305) formed on the printed circuit board (306) and including as many discontinuities (303—304) as the number of memory modules constituting a portion of the memory, the continuity of the conductor (305) being obtained by connection cables (302) integral with the said memory modules (301) by reason of a connection cabled by the memory module, the detector (401) of the physical presence only delivering a signal of the presence of a portion of the memory of the order n if the continuity of the associated conductor (305) is assured as well as the continuity of the conductor (305) of the fraction of the memory of the order (n—1).

6

**0 012 664**

2. Device according to claim 1, characterised in that the discontinuities (303—304) of a conductor (305) associated with a portion of the memory are in series, the whole of the conductors (305) being printed on a single layer of said printed circuit board (306).

3. Device according to claim 1 or 2, characterised in that the two extremities of said conductor (305) are respectively connected to earth and to an input of the said limit address generator (402).

FIGURE 1

18 cb          18  18          18 cb

cb

FIGURE 2

0012664

FIGURE 3

FIGURE 4

FIG.5

0012664

FIGURE 6

| N° de LIGNES | $\overline{PF8}$ | $\overline{PF1}$ | $\overline{PF2}$ | $\overline{PF3}$ | $\overline{PF4}$ | $\overline{PF5}$ | $\overline{PF6}$ | $\overline{PF7}$ | $\overline{A0}$ | $\overline{A1}$ | $\overline{A2}$ | B | $\overline{B}$ | AF0 | AF1 | AF2 |
|---|---|---|---|---|---|---|---|---|---|---|---|---|---|---|---|---|
| 0 | 1 | 1 | 1 | 1 | 1 | 1 | 1 | 1 | 1 | 1 | 1 | 0 | 1 | 1 | 1 | 1 |
| 1 | 0 | 1 | 1 | 1 | 1 | 1 | 1 | 1 | 1 | 1 | 1 | 1 | 0 | 0 | 0 | 0 |
| 2 | X | 0 | 1 | 1 | 1 | 1 | 1 | 1 | 1 | 1 | 0 | 1 | 0 | 0 | 0 | 1 |
| 3 | X | X | 0 | 1 | 1 | 1 | 1 | 1 | 1 | 0 | 1 | 1 | 0 | 0 | 1 | 0 |
| 4 | X | X | X | 0 | 1 | 1 | 1 | 1 | 1 | 0 | 0 | 1 | 0 | 0 | 1 | 1 |
| 5 | X | X | X | X | 0 | 1 | 1 | 1 | 0 | 1 | 1 | 1 | 0 | 1 | 0 | 0 |
| 6 | X | X | X | X | X | 0 | 1 | 1 | 0 | 1 | 0 | 1 | 0 | 1 | 0 | 1 |
| 7 | X | X | X | X | X | X | 0 | 1 | 0 | 0 | 1 | 1 | 0 | 1 | 1 | 0 |
| 8 | X | X | X | X | X | X | X | 0 | 0 | 0 | 0 | 1 | 0 | 1 | 1 | 1 |

FIGURE 7

FIGURE 8